# EUROPÄISCHE PATENTSCHRIFT

(11) **EP 3 668 674 B1**
(45) Veröffentlichungstag und Bekanntmachung des Hinweises auf die Patenterteilung: **15.12.2021**
(21) Anmeldenummer: 18765365.4
(22) Anmeldetag: 17.08.2018
(51) Int. Cl.: B23K 9/167, B23K 9/28, B23K 35/02

(54) **ELEKTRODE FÜR EINEN SCHWEISSBRENNER ODER EINEN SCHNEIDBRENNER**
ELECTRODE FOR A WELDING TORCH OR A CUTTING TORCH
ÉLECTRODE POUR UN CHALUMEAU DE SOUDAGE OU UN CHALUMEAU D'OXYCOUPAGE

(30) Priorität: 18.08.2017 DE 102017214460
(43) Veröffentlichungstag der Anmeldung: 24.06.2020
(73) Patentinhaber: Kjellberg-Stiftung, 03238 Finsterwalde (DE)
(72) Erfinder: SCHNICK, Michael, 09353 Oberlungwitz (DE); DREHER, Michael, 01665 Klipphausen (DE); SCHUSTER, Henning, 01279 Dresden (DE)
(74) Vertreter: Pfenning, Meinig & Partner mbB
(86) Internationale Anmeldenummer: PCT/EP2018/072327
(87) Internationale Veröffentlichungsnummer: WO 2019/034776

(56) Entgegenhaltungen:
- DE-A1-102015 001 455
- US-A- 2 922 868
- US-B1- 6 268 583

## Beschreibung

Die vorliegende Erfindung betrifft eine Elektrode für einen Schweißbrenner oder einen Schneidbrenner, einen Schweißbrenner oder einen Schneidbrenner mit einer derartigen Elektrode und ein Verfahren, bei dem die Elektrode eingesetzt wird.

Bei Lichtbogenschweißverfahren wird durch einen Lichtbogen ein Werkstück wenigstens teilweise aufgeschmolzen. Typischerweise dient hierbei das Werkstück als Anode und eine Wolframelektrode eines Schweißbrenners als Kathode.

Aus der Druckschrift DE 10 2015 001 455 A1 ist ein Verfahren bekannt, bei dem die Wolframelektrode die Anode bildet und das Werkstück die Kathode, wodurch sich eine auf dem Werkstück befindliche Oxidschicht aufgelöst werden kann. Allerdings ist die thermische Belastung der Wolframelektrode in diesem Fall deutlich höher als bei einem Einsatz als Kathode, was eine verbesserte Kühlung erfordert.

Der vorliegenden Erfindung liegt daher die Aufgabe zugrunde, eine Elektrode für einen Schweißbrenner oder einen Schneidbrenner vorzuschlagen, die die genannten Nachteile vermeidet, die also eine verbesserte Kühlung aufweist.

Diese Aufgabe wird erfindungsgemäß gelöst durch eine Elektrode nach Anspruch 1. Vorteilhafte Ausgestaltungen und Weiterbildungen sind in den abhängigen Ansprüchen beschrieben.

Eine Elektrode für einen Schweißbrenner oder einen Schneidbrenner weist einen Grundkörper und eine auf einer Abschlussfläche des Grundkörpers angeordnete Spitze auf. Der Grundkörper ist als mindestens einseitig offener Hohlkörper ausgebildet und weist an einer der Spitze gegenüberliegenden Seite eine Öffnung zum Einführen eines Kühlmediums in einen Innenraum des Grundkörpers auf. Außerdem weist der Grundkörper mindestens zwei Bereiche in dem Innenraum auf, die mit zwei voneinander verschiedenen Innendurchmessern versehen sind. Außerdem ist ein zwischen den beiden Bereichen befindlicher Übergangsbereich im Innenraum des Grundkörpers ausgebildet, der einen sich in Richtung der Spitze verkleinernden Innendurchmesser aufweist.

Durch die Ausbildung als einseitig offener Hohlkörper kann durch die Öffnung ein Kühlmedium, typischerweise Wasser, aber auch ein anderes Fluid, in den Kühlkörper eingebracht werden. Durch die Ausgestaltung des Innenraums mit mindestens drei Bereichen, wobei sich ein Durchmesser startend vom Durchmesser der Öffnung in Richtung der Abschlussfläche und der Spitze verjüngt, wird eine günstige Strömungsgeometrie geschaffen, in der das Kühlmedium mit ausreichend hoher Geschwindigkeit anströmt und entsprechend Wärme abführen kann. Somit wird eine thermische Belastung der Elektrode deutlich reduziert.

Die Spitze ist typischerweise aus einem von einem Werkstoff des Grundkörpers verschiedenen Werkstoff ausgebildet, es kann aber auch ein gleicher bzw. identischer Werkstoff für den Grundkörper und die Spitze verwendet werden. Es sollten jedoch generell mindestens zwei verschiedene Werkstoffe verwendet werden, auch wenn diese in einer Legierung oder als Matrixwerkstoff bzw. Verbundwerkstoff vorliegen.

Der Grundkörper selbst kann aus Kupfer oder einem anderen Metall ausgebildet sein, um die entsprechend hohe thermische und elektrische Leitfähigkeit dieses Werkstoffs auszunutzen. In bevorzugter Weise ist der Grundkörper aus Cu-HCP, also aus einem desoxidierten Kupfer mit niedrigem Restphosphorgehalt, oder aus schwefelversetztem Kupfer Cu-S mit verbesserter Spanfähigkeit ausgebildet.

Die Spitze ist vorzugsweise aus Wolfram ausgebildet, kann jedoch auch aus Wolfram mit einer Dotierung zur Erhöhung einer Elektronenemission an einer Anode ausgebildet sein, beispielsweise mit einer Dotierung von Lanthanoxid oder von Ceroxid. Es kann auch vorgesehen sein, eine Dotierung zum Vermindern einer Sauerstoffaffinität in der Spitze aus Wolfram vorzusehen. Derartige Dotierungen weisen typischerweise Yttrium oder Zirkon auf.

Der Grundkörper und die Spitze können jedoch auch einteilig oder einstückig aus gemischtem Kupfer und Wolfram, gegebenenfalls mit den beschriebenen Zusätzen, ausgebildet sein.

Typischerweise sind der Grundkörper und die Spitze einteilig ausgeführt, um einen mechanische stabilen Aufbau zu gewährleisten.

Erfindungsgemäß ist es vorgesehen, dass der Grundkörper an einer die Öffnung umschließenden Außenfläche bzw. Seitenfläche mit einem Gewinde versehen ist, wobei ein Durchmesser des Gewindes größer ist als ein Durchmesser der Abschlussfläche. Dies ermöglicht ein vereinfachtes Einschrauben des Grundkörpers in den Schweißbrenner bzw. den Schneidbrenner und unterstützt die verbesserte Strömungsführung des Kühlmediums. Der Durchmesser des Gewindes ist um mindestens 15 Prozent, vorzugsweise um mindestens 30 Prozent bis 70 Prozent, besonders vorzugsweise um mindestens 40 Prozent bis 60 Prozent größer als der Durchmesser der Abschlussfläche. Das Gewinde kann beispielsweise für einen besseren Stromübergang als Feingewinde nach DIN 13-21 ausgelegt sein kann.

Die beiden Bereiche des Innenraums mit voneinander verschiedenen Innendurchmessern sind typischerweise mit einem runden Querschnitt versehen, weisen also ein zylinderförmiges Volumen auf. Es kann aber auch vorgesehen sein, dass der Querschnitt mehreckig, beispielsweise sechseckig oder achteckig ist. Auch in diesem Fall kann ein Durchmesser definiert werden, der aber auch als Breite verstanden werden kann.

In seinem Innenraum der Öffnung gegenüberliegend kann der Grundkörper über eine Endfläche verfügen, die vorzugsweise als ebene Endfläche ausgeführt ist und typischerweise parallel zu der Abschlussfläche ausgerichtet ist. Durch eine geschlossene ebene bzw. flache Endfläche, d. h. eine Oberfläche ohne signifikante Erhebungen oder Vertiefungen, wird ein Wärmeabtransport durch Ausbilden einer gewünschten Anströmung erleichtert. Der Grundkörper ist dann also als einseitig offener Hohlkörper ausgebildet. Alternativ kann die Endfläche auch eine, typischerweise mittig angeordnete, Erhebung verfügen. Die Erhebung kann beispielsweise kegelförmig oder zylinderförmig ausgebildet sein.

Es kann aber auch vorgesehen sein, den Grundkörper als beidseitig offenen Hohlkörper auszuführen und an einer Öffnung der Abschlussfläche, die nun nicht mehr als geschlossene Fläche vorliegt, die Spitze anzuordnen. Typischerweise ragt die Spitze in diesem Fall auch in den Innenraum der Elektrode, um eine Wärmeabfuhr zu unterstützen.

An der Endfläche kann der Grundkörper in seinem Innenraum mindestens einen Eckenradius von mindestens 0,5 mm aufweisen, durch den ein Ausbilden eines Totwasserbereichs unterbunden und somit eine kontinuierliche Strömung unterstützt wird.

Es kann vorgesehen sein, dass ein zwischen der Abschlussfläche und der Endfläche befindlicher Steg des Grundkörpers eine Dicke aufweist, die maximal 40 Prozent einer ursprünglichen Höhe der Spitze entspricht. Unter dem Begriff "ursprüngliche Höhe" soll hierbei eine Höhe im Auslieferungszustand verstanden werden, die sich im Betrieb verkleinern kann. Die Abschlussfläche und die Endfläche liegen in diesem Fall jeweils als geschlossene Flächen vor. Die Höhe der Spitze soll dabei definiert sein als ein Abstand zwischen einem Punkt auf einer der Abschlussfläche abgewandten Seite der Spitze, der einen maximalen Abstand zu der Abschlussfläche aufweist, und einem Punkt der Spitze, der als senkrechte Projektion des ersten Punkts auf die Abschlussfläche in unmittelbar berührendem Kontakt mit der Abschlussfläche steht. Typischerweise beträgt diese ursprüngliche Höhe, d. h. die Höhe vor Durchführen eines Schweißvorgangs, zwischen 1,2 mm und 5 mm. Durch eine derartige Geometrie wird einerseits eine ausreichende mechanische Stabilität und andererseits eine genügend große Wärmeabfuhr gewährleistet.

Alternativ oder zusätzlich kann die Spitze eine kantenfreie und bzw. oder stufenlos konvexe Oberfläche an ihrer dem Grundkörper abgewandten Oberfläche aufweisen. Dies erlaubt eine gleichmäßigere Ausbildung eines Lichtbogens aufgrund eines stetigen Oberflächenverlaufs.

Der Grundkörper kann an seiner Außenseite mindestens eine Zentrierfläche aufweisen, durch die ein Einbau in den Schweißbrenner bzw. den Schneidbrenner erleichtert wird. Typischerweise ist, vorzugsweise korrespondierend zu den beiden Bereichen unterschiedlichen Innendurchmessers im Innenraum, auch auf der Außenseite ein erster Außenbereich mit einem kleineren Außendurchmesser als ein zweiter Außenbereich vorgesehen, der dementsprechend einen größeren Außendurchmesser aufweist. Zwischen diesem ersten Außenbereich und dem zweiten Außenbereich kann ein äußerer Übergangsbereich vorgesehen sein, in dem sich der Außendurchmesser zum zweiten Außenbereich hin vergrößert. Die Zentrierfläche ist typischerweise als Abschluss des äußeren Übergangsbereichs ausgebildet.

Vorzugsweise verändern sich sowohl der Innendurchmesser im inneren Übergangsbereich als auch der Außendurchmesser im äußeren Übergangsbereich stetig, also ohne Sprünge, Stufen, oder Kanten.

Der Grundkörper kann an seiner Außenseite eine Vertiefung aufweisen, in die typischerweise ein Dichtring eingebracht ist. Der Dichtring kann aus einem elastischen Werkstoff, insbesondere aus einem Kunststoff, vorzugsweise Polytetrafluorethylen, oder einem Metall, ausgebildet sein. Alternativ oder zusätzlich kann der Dichtring auch aus Polytetrafluorethylen, oder einem metallischen Werkstoff ausgebildet sein. Durch die Vertiefung mit dem Dichtring kann nach dem Einbau in den Schweißbrenner bzw. den Schneidbrenner eine fluiddichte Abdichtung erreicht werden.

Die Spitze kann auf der Anschlussfläche durch eine Lötverbindung oder eine Schweißverbindung befestigt sein, um einen sicheren Halt zu gewährleisten.

Ein Schweißbrenner oder ein Schneidbrenner weist typischerweise eine als Anode fungierende Elektrode mit den beschriebenen Eigenschaften auf. Die Elektrode kann aber natürlich auch als eine Kathode in dem Schweißbrenner oder dem Schneidbrenner verwendet werden. Ebenso kann der Schweißbrenner oder der Schneidbrenner auch mit einem elektrischen Wechselstrom betrieben werden.

Der Schweißbrenner oder der Schneidbrenner kann als Wolfram-Inertgas-Schweißbrenner oder Wolfram-Inertgas-Schneidbrenner ausgebildet sein. Unter einem Inertgas sollen im Rahmen dieser Schrift in erster Linie Argon und Helium sowie Gemische dieser beiden Gase verstanden werden. Außerdem sollen als Inertgas allerdings auch Mischungen der genannten Gase mit Aktivgasen wie Sauerstoff, Wasserstoff und bzw. oder Kohlenstoffdioxid verstanden werden. Die Aktivgase liegen dabei typischerweise in Konzentrationen kleiner als 5 Masseprozent in dem Inertgas vor.

Bei einem Verfahren zum Schweißen, vorzugsweise zum Wolfram-Inertgas-Schweißen, kann ein Schweißbrenner oder ein Schneidbrenner mit den beschriebenen Eigenschaften, also insbesondere mit einer Elektrode mit den zuvor beschriebenen Eigenschaften als einer Anode und einem Werkstück als einer Kathode durch Beaufschlagen der Anode und der Kathode mit einem elektrischen Schweißstrom ein Lichtbogen zwischen der Spitze der Elektrode und einem Bearbeitungsbereich des Werkstücks ausgebildet werden.

Bei dem Verfahren kann zusätzlich zu einem Schutzgas, das typischerweise beim Wolfram-Inertgas-Schweißen eingesetzt wird, ein Fokussiergas auf den Bearbeitungsbereich des Werkstücks geführt werden. Der Schweißbrenner oder der Schneidbrenner weist hierfür typischerweise zwei verschiedene Gaszufuhrkanäle auf, wobei der Gaszufuhrkanal für das Fokussiergas vorzugsweise zwischen der Elektrode und dem Gaszuführkanal für das Schutzgas angeordnet ist.

Ausführungsbeispiele der Erfindung sind in den Zeichnungen dargestellt und werden nachfolgend anhand der Figuren 1 bis 5 erläutert.

Es zeigen:
- Fig. 1: eine Schnittansicht einer Elektrode;
- Fig. 2: eine schematische Ansicht eines aus dem Stand der Technik bekannten Wolfram-Inertgas-Schweißverfahrens;
- Fig. 3: eine Figur 2 entsprechende Ansicht eines Wolfram-Inertgas-Schweißverfahrens unter Einsatz der Elektrode;
- Fig. 4: eine Figur 1 entsprechende Darstellung mit einer geometrisch modifizierten Endfläche und
- Fig. 5: eine Figur 1 entsprechende Darstellung mit einer in den Innenraum ragenden Spitze.

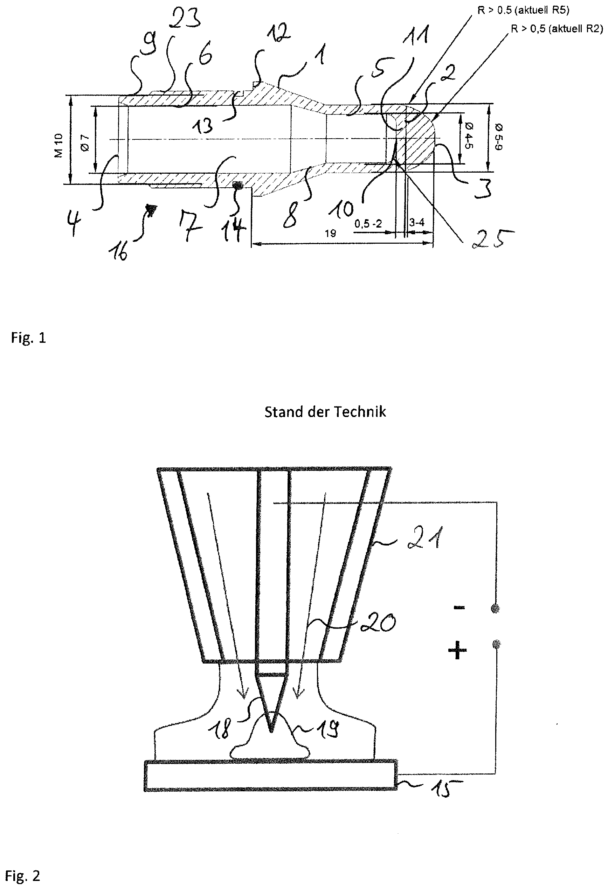

Figur 1 zeigt in einer Schnittdarstellung eine Elektrode 16. Die Elektrode 16 weist einen Grundkörper 1 aus Kupfer auf, der als einseitig offener Hohlkörper gestaltet ist, also als Hohlelektrode ausgebildet. Durch eine Öffnung 4 kann ein Kühlmedium wie Wasser in einen Innenraum 7 des Grundkörpers 1 eingefüllt werden. Die Öffnung 4 ist im dargestellten Ausführungsbeispiel rund und hat einen Durchmesser von 7 mm. In weiteren Ausführungsbeispielen kann jedoch auch eine andere Form der Öffnung 4 und bzw. oder ein anderer Durchmesser verwendet werden. Die in Figur 1 angegebenen Maßangaben sind ebenfalls lediglich als beispielhaft angesehen und können natürlich in weiteren Ausführungsbeispielen auch andere Werte annehmen.

An einer entlang einer Längsachse des Grundkörpers 1 der Öffnung 4 gegenüberliegenden Abschlussfläche 2 bzw. Stirnfläche ist eine Spitze 3 aus Wolfram aufgebracht und mittels einer Lötverbindung auf der Abschlussfläche 2 befestigt. Die Abschlussfläche 2 und eine Grundfläche der Spitze 3 liegen in dem in Figur 1 dargestellten Ausführungsbeispiel fluchtend übereinander, sind jeweils rund und weisen einen Durchmesser von 5 mm auf. In weiteren Ausführungsbeispielen kann der Durchmesser aber auch bis zu 9 mm betragen. Die Abschlussfläche 2 ist zudem unter einem Winkel von 90° zur umgebenden Außenfläche des Grundkörpers 1 angeordnet. Es kann außerdem vorgesehen sein, den Übergang zwischen dem Grundkörper 1 und der Spitze 3 mit einem Radius von 5 mm zu versehen. Dieser Radius sollte zumindest größer als 0,5 mm sein. Die Abschlussfläche 2 ist somit in Richtung eines zu bearbeitenden Werkstücks orientiert, was auch als lichtbogenseitig bezeichnet werden kann.

Die Spitze 3 weist eine ursprüngliche Höhe von 3 mm bis 5 mm in dem gezeigten Ausführungsbeispiel auf.Typischerweise ist ein Steg 11 des Grundkörpers 1, der zwischen der Abschlussfläche 2 auf der Außenseite des Grundkörpers 1 und einer dazu korrespondierenden, parallel zu der Abschlussfläche 2 verlaufenden Endfläche 10 auf einer Innenseite des Grundkörpers 1 verläuft, zwischen 0,5 mm und 2 mm dick.

Die Spitze 3 weist in ihrem ursprünglichen Zustand, also vor Durchführen eines Schweißverfahrens bzw. im Auslieferungszustand, eine typischerweise kantenfreie Oberfläche auf, die an ihrem vorderen, dem Grundkörper 1 abgewandten Ende abgeflacht ist und somit in diesem Bereich parallel zu der Abschlussfläche 2 verläuft. Dieses Ende kann ebenfalls mit einem Radius als Übergang zur restlichen Oberfläche der Spitze 3 versehen sein. Der Radius beträgt im dargestellten Ausführungsbeispiel 2 mm, sollte aber größer als 0,5 mm sein. Durch die derartige ballige Spitze 3 bzw. eine Spitze 3 mit einer Freiformfläche mit ähnlichen Krümmungsparametern können zeitlich möglichst konstante Lichtbogeneigenschaften erreicht werden.

Im Innenraum 7 des Grundkörpers 1 ist ein erster Bereich 5 in dem Innenraum 7 mit einem Innendurchmesser von 4-5 mm vorgesehen, ein zweiter Bereich 6 des Innenraums 7 mit einem Innendurchmesser von 7 mm, also einem Innendurchmesser, der gerade dem Durchmesser der an den zweiten Bereich 6 anschließenden Öffnung 4 entspricht, sowie ein innerer Übergangsbereich 8, in dem der Innendurchmesser startend von dem ersten Bereich 5 sich konisch vergrößert bis zu dem Innendurchmesser des zweiten Bereichs 6. Im Übergangsbereich 8 beträgt die Steigung zwischen 5° und 30°, vorzugsweise zwischen 10° und 20°. Durch diese Innendurchmesser wird eine hohe Strömungsgeschwindigkeit an einer Elektrodenspitze erreicht und somit ein Wärmeabtransport unterstützt, während an einem Elektrodenschaft, an dem auch die Öffnung 4 angeordnet ist, sich eine geringere Strömungsgeschwindigkeit mit einem geringeren Strömungswiderstand, respektive einem geringeren Druckabfall ausbildet.

Die Außenseite des Grundkörpers 1 ist in ähnlicher Weise in drei Bereiche unterteilt. In einem ersten äußeren Bereich entspricht ein Außendurchmesser in dem gezeigten Ausführungsbeispiel dem Durchmesser der Spitze 3, in einem zweiten Bereich dagegen einem Durchmesser eines auf einer die Öffnung 4 umschließenden Seitenfläche angeordneten metrischen Gewindes 23, das mit einem Außendurchmesser M 10 x 0,75 ausgeführt sowie nach DIN 13-21 bis -23 ausgestaltet ist. Zusätzlich kann eine Einführhilfe 9 vorgesehen sein, bei der zwischen einem der Spitze 3 abgewandten Ende des Grundkörpers 1 und dem Gewinde 23 ein Freiraum mit einer Länge von 1 mm bis 5 mm vorgesehen ist.

In einem äußeren Übergangsbereich findet wiederum eine Vergrößerung des Außendurchmessers statt. Eine Steigung in diesem Bereich kann zwischen 5° und 30°, vorzugsweise zwischen 10° und 20° betragen. Wie in Figur 1 dargestellt, können sowohl in dem inneren Übergangsbereich als auch in dem äußeren Übergangsbereich der Innendurchmesser und der Außendurchmesser stetig, also ohne Stufen, verändert werden. Der Außendurchmesser des Gewindes 23 ist typischerweise um mindestens 15 Prozent größer als der Durchmesser der Abschlussfläche 2.

Außerdem ist anschließend an den äußeren Übergangsbereich auf der Außenseite des Grundkörpers 1 eine dem zweiten äußeren Bereich, also auch der Öffnung 4 zugewandte Zentrierfläche 12 vorgesehen, die ebenfalls einer vereinfachten Befestigung der Elektrode 16 dient. Dementsprechend kann ein Schweißbrenner eine korrespondierende Gegenfläche zu der Zentrierfläche 12 im Elektrodenhalter aufweisen die eine Spielpassung H7g7 bzw. H7f7 bildet. An die Zentrierfläche 12 in Richtung der Öffnung 4 anschließend ist der Grundkörper 1 auf seine Außenseite zudem mit einer Vertiefung 13 versehen, in die ein Dichtring 14 aus einem elastischen Kunststoff eingelassen ist. Ein Abstand zwischen der Zentrierfläche 12 und einem Ende der Spitze 3 beträgt im dargestellten Ausführungsbeispiel 19 mm. Der Dichtring 14 kann je nach Ausführungsform sowohl links als auch rechts von der Zentrierfläche 12 angeordnet sein, also entweder zwischen der Zentrierfläche 12 und der Öffnung 4 oder zwischen der Zentrierfläche 12 und der Spitze 3.

Um einen optimierten Strömungsverlauf des Kühlmediums im Innenraum 7 des Grundkörpers 1 zu gewährleisten, ist die Endfläche 10 mit einem Eckenradius 25 von 1 mm versehen, der in weiteren Ausführungsbeispielen aber auch zwischen 0,25 mm und 2 mm, vorzugsweise zwischen 0,5 mm und 1,5 mm liegen kann. Die Endfläche 10 kann auch spitz zulaufend mit einem Öffnungswinkel zwischen 150° und 210° beiden Schenkeln ausgebildet sein, wobei bei dem in Figur 1 dargestellten Ausführungsbeispiel gerade ein Öffnungswinkel von 180° erreicht wird.

Für eine effiziente Kühlung kann ein Verhältnis einer Länge des ersten Bereichs 5 zu dem Innendurchmesser in diesem Bereich zwischen 0,5 und 1,5 betragen.

Die zuvor beschriebene Elektrode 16 wird typischerweise in einem Schweißbrenner als Anode eingesetzt. Damit kann ein Wolfram-Inertgas-Schweißen durchgeführt werden, der Schweißbrenner ist in diesem Fall also ein Wolfram-Inertgas-Schweißbrenner. In weiteren Ausführungsbeispielen kann statt eines Schweißbrenners auch ein Schneidbrenner verwendet und mit der zuvor und im Folgenden beschriebenen Elektrode versehen werden.

Zum Aufbringen der Spitze 3 auf den Grundkörper 1 können generell Lötverfahren oder Schweißverfahren verwendet werden, die die zum Fügen notwendige Temperatur auf eine unmittelbare Fügezone des Werkstücks, d. h. des Grundkörpers 1, beschränken und dadurch kaltverfestigte Materialeigenschaften (insbesondere eine höhere Festigkeit) im überwiegenden Teil der Elektrode 16 erhalten bleiben, was insbesondere für spanende Bearbeitung wichtig ist. Mögliche Verfahren sind daher Reibschweißen, z.B. Rotationsreibschweißen, Trägheitsreibschweißen, Direktantrieb Reibschweißen, Perkussionsschweißen, z.B. Kondensatorentladungsschweißen, Ultraschallschweißen, Explosionsschweißen, Diffusionsschweißen und bzw. oder Widerstandsschweißen. Als Lötverfahren können Autogenlöten, Induktionslöten, Schutzgaslöten, Vakuumlöten, Laserlöten, und bzw. oder Infrarotlöten verwendet werden. Alternativ oder zusätzlich können als Lote spezielle silberhaltige Hartlote mit benetzungsfördernden Mitteln für Hartmetall wie Mangan oder Nickel und bzw. oder Sandwichlote mit Kupfereinlage zur Minderung thermischer Spannungen Anwendung finden.

In Figur 2 ist in einer schematischen seitlichen Ansicht ein konventionelles, aus dem Stand der Technik bekanntes Wolfram-Inertgas-Schweißverfahren dargestellt. Ein Schweißbrenner 21 weist eine Elektrode 18 auf, die einen Lichtbogen 19 ausbildet und somit ein Werkstück 15 bearbeitet. Die Elektrode 18 fungiert als Kathode und ein Schutzgas 20 wird auf eine zu bearbeitende Oberfläche des Werkstücks 15 geleitet. Wiederkehrende Merkmale sind in dieser Figur wie auch in der folgenden Figur mit identischen Bezugszeichen versehen.

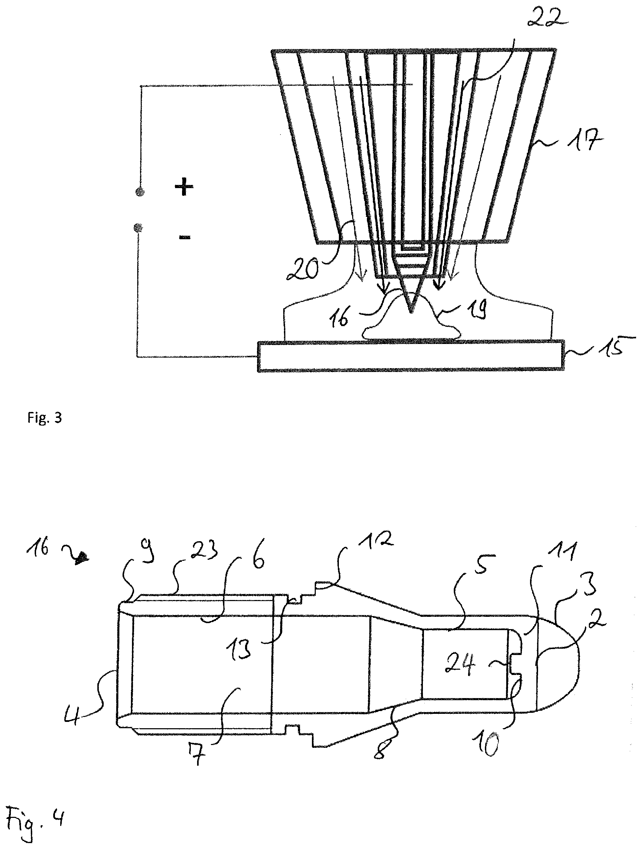

In Figur 3 ist in einer Figur 2 entsprechenden Ansicht ein Hochleistungs-Pluspol-Wolfram-Inertgas-Schweißverfahren dargestellt. Ein Schweißbrenner 17 weist nun die mittig in dem Schweißbrenner 17 gelagerte Elektrode 16 mit den zuvor beschriebenen Eigenschaften auf, die nun allerdings als Anode dient. Durch Anlegen eines elektrischen Schweißstroms zwischen der Elektrode 16 und dem Werkstück 15 bildet sich der Lichtbogen 19 auf einem Bearbeitungsbereich des Werkstücks 15 aus. Zusätzlich zu dem Schutzgas 20, das typischerweise ein inertes Gas wie Helium oder Argon ist, wird nun ein Fokussiergas 22, beispielsweise ein inertes Gas mit 100-1000 ppm Sauerstoff, vorzugsweise Argon mit 300 ppm Sauerstoff, durch den Schweißbrenner 17 auf den Bearbeitungsbereich des Werkstücks 15 geleitet.

In Figur 4 ist in einer Figur 1 entsprechenden Darstellung wiederum ein Querschnitt der Elektrode 16 gezeigt, bei dem die Endfläche 10 nun aber nicht eben ist, sondern eine mittig angeordnete Erhebung 24 aufweist. In dem dargestellten Ausführungsbeispiel ist eine Höhe der Erhebung 24 kleiner einem Abstand einer Seitenfläche der Erhebung 24 zu einer die Erhebung 24 umgebenden Wand des Innenraums 7. Die Erhebung 24 ist einteilig mit dem Grundkörper 1 in einer stoffschlüssigen Verbindung ausgeführt und dient einem verbesserten Wärmetransport von der Spitze 3 in den Innenraum 7, so dass anfallende Wärme auch einfacher im Innenraum 7 abgeleitet werden kann.

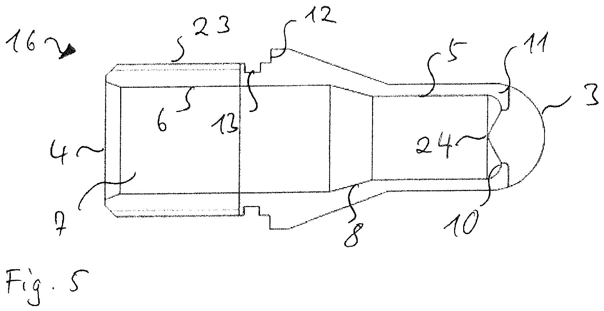

In entsprechender Weise zeigt Figur 5 ein Ausführungsbeispiel, bei dem die Abschlussfläche 2 nicht geschlossen ist, sondern eine Öffnung aufweist, in die die Spitze 3 eingebracht ist. Der Grundköper ist somit ein beidseitig geöffneter Hohlkörper, wobei beide Öffnungen einander gegenüberliegen. Die Spitze 3 weist nun ebenfalls eine kegelförmige, in den Innenraum 7 weisende Erhebung 24 auf, durch die ein verbesserter Wärmetransport gegeben ist.

## Patentansprüche

1. Elektrode (16) für einen Schweißbrenner (17) oder einen Schneidbrenner mit
einem Grundkörper (1) und
einer auf einer Abschlussfläche (2) des Grundkörpers (1) angeordneten Spitze (3),
wobei der Grundkörper (1) als mindestens einseitig offener Hohlkörper ausgebildet ist, und
an einer der Spitze (3) gegenüberliegenden Seite eine Öffnung (4) zum Einführen eines Kühlmediums in einen Innenraum (7) des Grundkörpers (1) aufweist, und **dadurch gekennzeichnet, dass** der Grundkörper
mindestens zwei Bereiche (5, 6) in dem Innenraum (7) mit zwei voneinander verschiedenen Innendurchmessern sowie einen zwischen den beiden Bereichen (5, 6) befindlichen Übergangsbereich (8) mit einem sich in Richtung der Spitze (3) verkleinernden Innendurchmesser aufweist, wobei der Grundkörper (1) an einer die Öffnung (4) umschließenden Außenfläche mit einem Gewinde (23) versehen ist, wobei ein Durchmesser des Gewindes (23) größer ist als ein Durchmesser der Abschlussfläche (2), und der Durchmesser des Gewindes (23) um mindestens 15 Prozent größer ist als der Durchmesser der Abschlussfläche (2).

2. Elektrode (16) nach Anspruch 1, **dadurch gekennzeichnet, dass** der Durchmesser des Gewindes (23) um mindestens 30 Prozent bis 70 Prozent, vorzugsweise um mindestens 40 Prozent bis 60 Prozent größer ist als der Durchmesser der Abschlussfläche (2).

3. Elektrode (16) nach einem der vorhergehenden Ansprüche, **dadurch gekennzeichnet, dass** die Spitze (3) aus einem von einem Werkstoff des Grundkörpers (1) verschiedenen Werkstoff ausgebildet ist.

4. Elektrode (16) nach einem der vorhergehenden Ansprüche, **dadurch gekennzeichnet, dass** der Grundkörper (1) in seinem Innenraum (7) der Öffnung (4) gegenüberliegend eine, vorzugsweise ebene, Endfläche (10) aufweist, die parallel zu der Abschlussfläche (2) ausgerichtet ist.

5. Elektrode (16) nach Anspruch 4, **dadurch gekennzeichnet, dass** der Grundkörper (1) in seinem Innenraum (7) an der Endfläche (10) mindestens einen Eckenradius (25) von mindestens 0,5 mm aufweist.

6. Elektrode (16) nach einem der Ansprüche 4 oder 5, **dadurch gekennzeichnet, dass** ein zwischen der Abschlussfläche (2) und der Endfläche (10) befindlicher Steg (11) des Grundkörpers (1) eine Dicke aufweist, die maximal 40 Prozent einer ursprünglichen Höhe der Spitze (3) entspricht.

7. Elektrode (16) nach einem der vorhergehenden Ansprüche, **dadurch gekennzeichnet, dass** die Spitze (3) eine kantenfreie und/oder stufenlos konvexe Oberfläche an ihrer dem Grundkörper (1) abgewandten Seite aufweist.

8. Elektrode (16) nach einem der vorhergehenden Ansprüche, **dadurch gekennzeichnet, dass** der Grundkörper (1) an seiner Außenseite mindestens eine Zentrierfläche (12) aufweist.

9. Elektrode (16) nach einem der vorhergehenden Ansprüche, **dadurch gekennzeichnet, dass** der Grundkörper (1) an seiner Außenseite eine Vertiefung (13) aufweist, in die ein Dichtring (14) eingebracht ist.

10. Elektrode (16) nach einem der vorhergehenden Ansprüche, **dadurch gekennzeichnet, dass** die Spitze (3) auf der Anschlussfläche (2) durch eine Lötverbindung oder eine Schweißverbindung befestigt ist.

11. Schweißbrenner (17) oder Schneidbrenner mit einer als Anode fungierenden Elektrode nach einem der vorhergehenden Ansprüche.

12. Schweißbrenner (17) oder Schneidbrenner nach Anspruch 11, **dadurch gekennzeichnet, dass** der Schweißbrenner (17) als Wolfram-Inertgas-Schweißbrenner oder als Wolfram-Inertgas-Schneidbrenner ausgebildet ist.

13. Verfahren zum Schweißen, bei dem durch einen Schweißbrenner (17) oder einen Schneidbrenner nach einem der Ansprüche 11 oder 12 mit einem Werkstück (15) als einer Kathode durch Beaufschlagen der Anode und der Kathode mit einem elektrischen Schweißstrom ein Lichtbogen (19) zwischen der Spitze (3) der Elektrode (16) und einem Bearbeitungsbereich des Werkstücks (15) ausgebildet wird.

14. Verfahren nach Anspruch 13, **dadurch gekennzeichnet, dass** durch den Schweißbrenner (17) oder den Schneidbrenner zusätzlich zu einem Schutzgas (20) ein Fokussiergas (22) auf den Bearbeitungsbereich des Werkstücks (15) geführt wird.

## Claims

1. An electrode (16) for a welding torch (17) or a cutting torch having
a base body (1) and
a tip (3) arranged on a connection surface (2) of the base body (1),
the base body (1) being designed as a hollow body open at least on one side, and on a side opposite the tip (3) having an opening (4) for introducing a cooling medium into an interior space (7) of the base body (1), and **characterized in that**, the base body has at least two regions (5, 6) in the interior space (7) having two different inner diameters and a transition region (8) located between the two regions (5, 6) having an inner diameter that decreases in the direction of the tip (3), wherein the base body (1) is provided with a thread (23) on an outer surface surrounding the opening (4), wherein a diameter of the thread (23) is greater than a diameter of the connection surface (2), and the diameter of the thread (23) is at least 15 percent larger than the diameter of the connection surface (2).

2. The electrode (16) according to claim 1, **characterized in that** the diameter of the thread (23) is at least 30 percent to 70 percent, preferably at least 40 percent to 60 percent larger than the diameter of the connection surface (2).

3. The electrode (16) according to any one of the preceding claims, **characterized in that** the tip (3) is formed from a material different from a material of the base body (1).

4. The electrode (16) according to any one of the preceding claims, **characterized in that** the base body (1) has, in its interior space (7) opposite the opening (4), a, preferably flat, end surface (10) aligned parallel to the connection surface (2).

5. The electrode (16) according to claim 4, **characterized in that** the base body (1) has at least one corner radius (25) of at least 0.5 mm in its interior space (7) on the end surface (10).

6. The electrode (16) according to any one of claims 4 or 5, **characterized in that** a bar (11) of the base body (1) located between the connection surface (2) and the end surface (10) has a thickness corresponding to a maximum of 40 percent of an original height of the tip (3).

7. The electrode (16) according to any one of the preceding claims, **characterized in that** the tip (3) has an edge-free and/or continuously convex surface on its side facing away from the base body (1).

8. The electrode (16) according to any one of the preceding claims, **characterized in that** the base body (1) has at least one centering surface (12) on its outside.

9. The electrode (16) according to any one of the preceding claims, **characterized in that** the base body (1) has a recess (13) on its outside, into which recess a sealing ring (14) is introduced.

10. The electrode (16) according to any one of the preceding claims, **characterized in that** the tip (3) is attached to the connection surface (2) by a soldered connection or a welded connection.

11. A welding torch (17) or cutting torch having an electrode functioning as an anode according to any one of the preceding claims.

12. The welding torch (17) or cutting torch according to claim 11, **characterized in that** the welding torch (17) is designed as a tungsten inert gas welding torch or as a tungsten inert gas cutting torch.

13. A method for welding in which an arc (19) is formed between the tip (3) of the electrode (16) and a machining region of the workpiece (15) by a welding torch (17) or a cutting torch according to any one of claims 11 or 12 with a workpiece (15) as a cathode by applying an electrical welding current to the anode and the cathode.

14. The method according to claim 13, **characterized in that**, in addition to a protective gas (20), a focusing gas (22) is guided through the welding torch (17) or the cutting torch onto the machining region of the workpiece (15).

## Revendications

1. Electrode (16) pour un chalumeau de soudage (17) ou un chalumeau d'oxycoupage avec
un corps de base (1) et
une pointe (3) disposée sur une surface terminale (2) du corps de base (1),
dans laquelle le corps de base (1) est réalisé sous la forme d'un corps creux ouvert sur au moins un côté, et présente, sur un côté opposé à la pointe (3), une ouverture (4) pour introduire un milieu de refroidissement dans un espace intérieur (7) du corps de base (1), et **caractérisée en ce que** le corps de base présente au moins deux régions (5, 6) dans l'espace intérieur (7) avec deux diamètres intérieurs différents l'un de l'autre et une région de transition (8) se trouvant entre les deux régions (5, 6) avec un diamètre intérieur diminuant en direction de la pointe (3), dans laquelle le corps de base (1) est pourvu d'un filet (23) sur une surface extérieure entourant l'ouverture (4), dans laquelle un diamètre du filet (23) est plus grand qu'un diamètre de la surface terminale (2), et le diamètre du filet (23) est au moins 15 pour cent plus grand que le diamètre de la surface terminale (2).

2. Electrode (16) selon la revendication 1, **caractérisée en ce que** le diamètre du filet (23) est plus grand que le diamètre de la surface terminale (2) d'au moins 30 pour cent à 70 pour cent de préférence d'au moins 40 pour cent à 60 pour cent.

3. Electrode (16) selon l'une quelconque des revendications précédentes, **caractérisée en ce que** la pointe (3) est réalisée à partir d'un matériau différent d'un matériau du corps de base (1).

4. Electrode (16) selon l'une quelconque des revendications précédentes, **caractérisée en ce que** le corps de base (1) présente dans son espace intérieur (7) à l'opposé de l'ouverture (4) une surface d'extrémité (10), de préférence plane, qui est orientée parallèlement à la surface terminale (2).

5. Electrode (16) selon la revendication 4, **caractérisée en ce que** le corps de base (1) présente dans son espace intérieur (7) au niveau de la surface d'extrémité (10) au moins un rayon de coin (25) d'au moins 0,5 mm.

6. Electrode (16) selon l'une quelconque des revendications 4 ou 5, **caractérisée en ce qu'**une entretoise (11) du corps de base (1) se trouvant entre la surface terminale (2) et la surface d'extrémité (10) présente une épaisseur qui correspond à un maximum de 40 pour cent d'une hauteur initiale de la pointe (3).

7. Electrode (16) selon l'une quelconque des revendications précédentes, **caractérisée en ce que** la pointe (3) présente une surface sans bord et/ou convexe de manière continue sur son côté opposé au corps de base (1).

8. Electrode (16) selon l'une quelconque des revendications précédentes, **caractérisée en ce que** le corps de base (1) présente au moins une surface de centrage (12) sur son côté extérieur.

9. Electrode (16) selon l'une quelconque des revendications précédentes, **caractérisée en ce que** le corps de base (1) présente sur sa face extérieure un évidement (13) dans lequel est insérée une bague d'étanchéité (14).

10. Electrode (16) selon l'une quelconque des revendications précédentes, **caractérisée en ce que** la pointe (3) est fixée à la surface terminale (2) par une liaison brasée ou une liaison soudée.

11. Chalumeau de soudage (17) ou chalumeau d'oxycoupage avec une électrode selon l'une quelconque des revendications précédentes fonctionnant comme une anode.

12. Chalumeau de soudage (17) ou chalumeau d'oxycoupage selon la revendication 11, **caractérisé en ce que** le chalumeau de soudage (17) est réalisé sous la forme d'un chalumeau de soudage au gaz inerte et au tungstène ou d'un chalumeau d'oxycoupage au gaz inerte et au tungstène.

13. Procédé de soudage, selon lequel un arc (19) est réalisé avec une pièce (15) comme cathode entre la pointe (3) de l'électrode (16) et une région d'usinage de la pièce (15) par sollicitation de l'anode et de la cathode avec un courant électrique de soudage par un chalumeau de soudage (17) ou un chalumeau d'oxycoupage selon l'une quelconque des revendications 11 ou 12.

14. Procédé selon la revendication 13, **caractérisé en ce que**, en plus d'un gaz de protection (20), un gaz de focalisation (22) est guidé par le chalumeau de soudage (17) ou le chalumeau d'oxycoupage sur la région d'usinage de la pièce (15).
